# EUROPÄISCHE PATENTSCHRIFT

(11) **EP 1 554 852 B1**
(45) Veröffentlichungstag und Bekanntmachung des Hinweises auf die Patenterteilung: **30.04.2008**
(21) Anmeldenummer: 03757680.8
(22) Anmeldetag: 22.09.2003
(51) Int. Cl.: H04L 27/06, H04L 25/06, G06K 19/07

(54) **SCHALTUNGSANORDNUNG ZUR ANALOG-DIGITAL-WANDLUNG EINER DURCH WECHSEL DER AMPLITUDE ZWISCHEN EINEM NIEDRIGEN UND EINEM HOHEN PEGEL (ASK-) MODULIERTEN SPANNUNG**
CIRCUIT ARRANGEMENT FOR THE ANALOG-DIGITAL CONVERSION OF A VOLTAGE (ASK-)MODULATED BY MODIFYING THE AMPLITUDE BETWEEN A LOW LEVEL AND A HIGH LEVEL
ENSEMBLE CIRCUIT POUR LA CONVERSION ANALOGIQUE NUMERIQUE D'UNE TENSION MODULEE PAR DEPLACEMENT D'AMPLITUDE, PAR VARIATION DE L'AMPLITUDE ENTRE UN NIVEAU BAS ET UN NIVEAU HAUT

(30) Priorität: 10.10.2002 DE 10247306; 09.12.2002 DE 10257442
(43) Veröffentlichungstag der Anmeldung: 20.07.2005
(73) Patentinhaber: Infineon Technologies AG, 81669 München (DE)
(72) Erfinder: MISSONI, Albert, A-8010 Graz (AT)
(74) Vertreter: Epping - Hermann - Fischer
(86) Internationale Anmeldenummer: PCT/DE2003/003148
(87) Internationale Veröffentlichungsnummer: WO 2004/036860

(56) Entgegenhaltungen:
- DE-A- 10 116 747
- US-A- 6 069 499

## Beschreibung

Die Erfindung betrifft eine Schaltungsanordnung zur Analog-digital-Wandlung einer durch Wechsel der Amplituden zwischen einem niedrigen und einem hohen Pegel (ASK-) modulierten Spannung gemäß Patentanspruch 1.

Beim Einsatz von kontaktlosen Chipkarten und ähnlichen, wie beispielsweise sogenannte kontaktlose Tags, wird häufig eine sogenannte ASK-Modulation eingesetzt. Man versteht hierunter ein hochfrequentes Signal, das mit in digitaler Form vorliegenden Daten zwischen einem ersten und einem zweiten Pegel wechselt, und somit das hochfrequente Signal moduliert.

So wie bei digitalen Daten zwischen "Ja" und "Nein" oder "1" und "0" oder "high" und "low" unterschieden wird, wird zwischen einer hohen Amplitude und einer niedrigen Amplitude unterschieden. Hierbei sind zur Zeit die beiden Modulationsarten ASK 100 und ASK 10 üblich, wobei ASK 100 einen Pegelunterschied von 100% und ASK 10 einen Pegelunterschied von 10% bedeutet. Es sind jedoch auch andere Unterschiede möglich und die nachfolgend beschriebene Erfindung ist nicht auf diese beiden üblichen Modulationsarten eingeschränkt.

Das Problem der ASK-Modulation ist darin zu sehen, daß es auch durch eine Änderung im Abstand zwischen Sender und Empfänger des so modulierten Signales bei Gleichbleiben der Amplitude des ausgesendeten Signales, empfängerseitig zu einer Änderung der empfangenen Amplitude kommt, wenn der Abstand sich verändert. Gleiches gilt, wenn im Zwischenraum zwischen Sender und Empfänger Unterschiede eintreten.

Als erschwerend kommt hinzu, daß bei der Verwendung von Signalen, die stets auf "Null" zurückkehren, d.h. zwischen zwei binären "einsen" kehrt das Signal auf "Null" zurück, und Signalen die dies nicht vorsehen, unterschiedlich lange "0"- und "1"-Sequenzen moduliert und übertragen werden.

Aus US 6069499 (Gea-ok Cho), 30.05.2000, ist eine Schaltungsanordnung zur Analog-Digital-Wandlung einer modulierten Spannung mit einer einem Hochfrequenzeingang nachfolgenden Gleichrichterschaltung bekannt.

Die Patentanmeldung WO 02/082634 (INFINEON), 17.10.2002, die nach Artikel 54(3) und (4) EPÜ zum Stand der Technik gehört, beschreibt eine Schaltungsanordnung zur Demodulation einer durch Wechsel der Amplitude zwischen einem niedrigen und einem hohen Pegel (ASK-)modulierten Spannung.

Der Erfindung liegt somit die Aufgabe zugrunde, eine Analog-digital-Wandlerschaltung vorzusehen, mit der mit möglichst geringem Aufwand sicher der Pegelwechsel zwischen zwei Zuständen bei ASK-Modulationen erkannt wird.

Diese Aufgabe wird erfindungsgemäß durch die im Patentanspruch 1 angegebenen Maßnahmen gelöst. Die angegebene Schaltung weist den Vorteil auf, daß beim Vergleich der beiden Ladespannungen der Wechsel des Modulationspegels leicht erkennbar ist.

Nachfolgend wir die Erfindung unter Bezugnahme auf die Zeichnung im einzelnen erläutert.

Es zeigen:
Figur 1 ein erstes Ausführungsbeispiel der erfindungsgemäßen Schaltungsanordnung,
Figur 2 die Hüllkurve eines ASK-modulierten Signales,
Figur 3 einen beispielhaften Verlauf der ersten und zweiten Ladespannung,
Figur 4 ein zweites erfindungsgemäßes Ausführungsbeispiel,
Figur 5 ein Beispiel einer Auswerteschaltung,
Figur 6 einen beispielhaften Verlauf der an der Auswerteschaltung anliegenden Spannungen,
Figur 7 eine schaltungstechnisch dimensionierte Realisierung der Erfindung und
Figur 8 einen beispielhaften Verlauf der an der Auswerteschaltung anliegenden Spannungen, wobei die erste Ladespannung mit veränderter Lade, bzw. Entladezeit erzeugt ist.

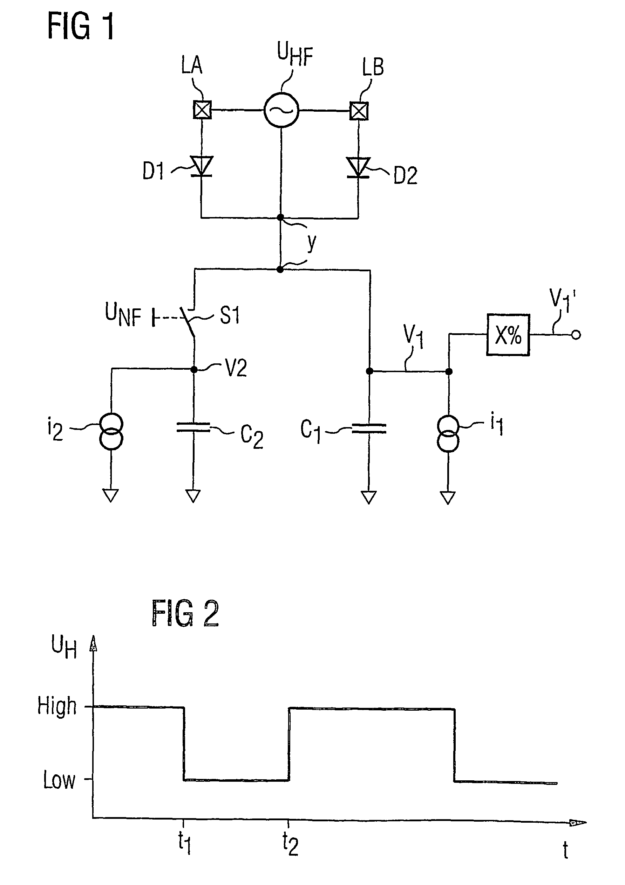

Bei dem in Figur 1 dargestellten ersten erfindungsgemäßen Ausführungsbeispiel liegt eine hochfrequente Eingangsspannung UHF am Eingang der Demodulatorschaltung an, der durch die beiden Eingangsanschlüsse LA und LB bezeichnet ist. In Figur 2 ist die Hüllkurve des Amplitudenbetrags der hochfrequenten Eingangsspannung über der Zeit aufgetragen. Wie zu sehen ist, wechselt sie zwischen einem hohen Amplitudenpegel, der mit "high" bezeichnet ist und einem niedrigen Amplitudenpegel, der mit "low" bezeichnet ist. Diese gleichgerichtete hochfrequente Eingangsspannung UHF liegt somit in gleichgerichteter Form am Knoten Y an. Am Knoten Y sind parallel zwei Ladeschaltungen angeschlossen, die durch die gleichgerichtete hochfrequente Spannung geladen werden.

Die erste Ladeschaltung besteht aus dem Kondensator C1 und einer Stromquelle i1, die wiederum vom Spannungsknoten V1 abgehend parallel geschaltet sind. Entsprechend ist die zweite Ladeschaltung aus dem Kondensator C2 und der Stromquelle i2 aufgebaut, die vom Stromknoten V2 ausgehend parallelgeschaltet sind. Die zweite Ladeschaltung ist über einen Ladeschalter S1 an dem Knoten Y angeschlossen. Dieser Schalter S1 wird mit der niederfrequenten Spannung UNF, mit der die hochfrequente Wechselspannung UHF moduliert ist, betätigt. In einfachster Weise ist dies mittels einer nicht dargestellten Diode möglich.

Nachfolgend wird die Funktionsweise dieser Schaltung erläutert. Solange die gleichgerichtete hochfrequente Spannung UHF am Knoten Y größer als die Spannung an den Eingangsknoten V1 und V2 der Ladeschaltungen ist und der Schalter S1 geschlossen ist, werden die Kondensatoren C1 und C2 auf den Wert der gleichgerichteten hochfrequenten Wechselspannung UHF aufgeladen. Gleichzeitig werden die Kondensatoren C1 und C2 durch die Stromquellen i1 beziehungsweise i2 entladen, wobei die Zeitkonstante der beiden Ladeschaltungen so zu wählen ist, daß sie groß gegenüber der Halbperiode der hochfrequenten Eingangsspannung UHF ist, damit es an den beiden Eingangsknoten V1 und V2 der Ladeschaltungen zu keinen wesentlichen Spannungsschwankungen (Brummen) kommt, die von den Nulldurchgängen der hochfrequenten Wechselspannung herrühren.

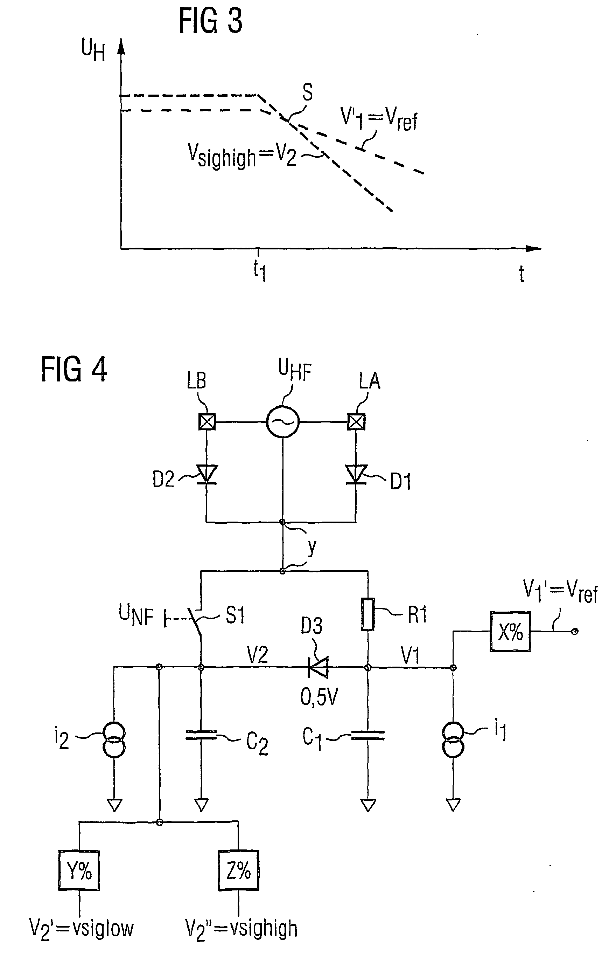

Wie in Figur 2 dargestellt, soll nunmehr die Amplitude der hochfrequenten Eingangsspannung UHF sich bis zur Zeit vor t1 auf dem "high"-Pegel befinden. Zum Zeitpunkt t1 wechselt sie über zum "low"-Pegel. Dieser Wechsel bewirkt, daß der Schalter S1 öffnet und die zweite Ladeschaltung und damit der Eingangsknoten V2 von der restlichen Schaltung abgekoppelt ist. Sind die Zeitkonstanten der ersten und zweiten Ladeschaltung unterschiedlich gewählt, kommt es zu einem unterschiedlichen Entladen der beiden Kondensatoren C1 und C2. Dies ist beispielsweise dadurch möglich, daß die beiden Kondensatoren C1 und C2 gleich groß sind, die Stromquellen i1 und i2 jedoch unterschiedlich stark sind. Das hieraus resultierende Entladeverhalten ist in Figur 3 dargestellt.

Wie der Figur 3 zu entnehmen ist, sinkt die Spannung am Knoten V2 deutlich steiler ab als die Spannung am Knoten V1. Wie in Figur 1 zu sehen ist, ist die Spannung V1 nochmals mittels eines Spannungsteilers X% auf eine Spannung auf V1' umgesetzt. Somit kommt es, wie in Figur 3 zu sehen ist, zu einem Schneiden der Entladekurven V2 und V1'. Der Schnittpunkt S ist nunmehr geeignet, um den Übergang vom "high"-Pegel zum "low"-Pegel zu kennzeichnen. Mittels einer später noch beschriebenen Auswerteschaltung ist ein solcher Schnittpunkt erfaßbar.

Gemäß Figur 4 ist eine weitere Ausgestaltung der erfindungsgemäßen Schaltung dargestellt. Hierbei sei zunächst auf die beiden Spannungsteiler Y% und Z% verwiesen, die die Spannung des Knotens V2 in zwei unterschiedliche Spannungen V2', auch als "V siglow" bezeichnet, und V2'' auch als "V sighigh" bezeichnet, umgesetzt.

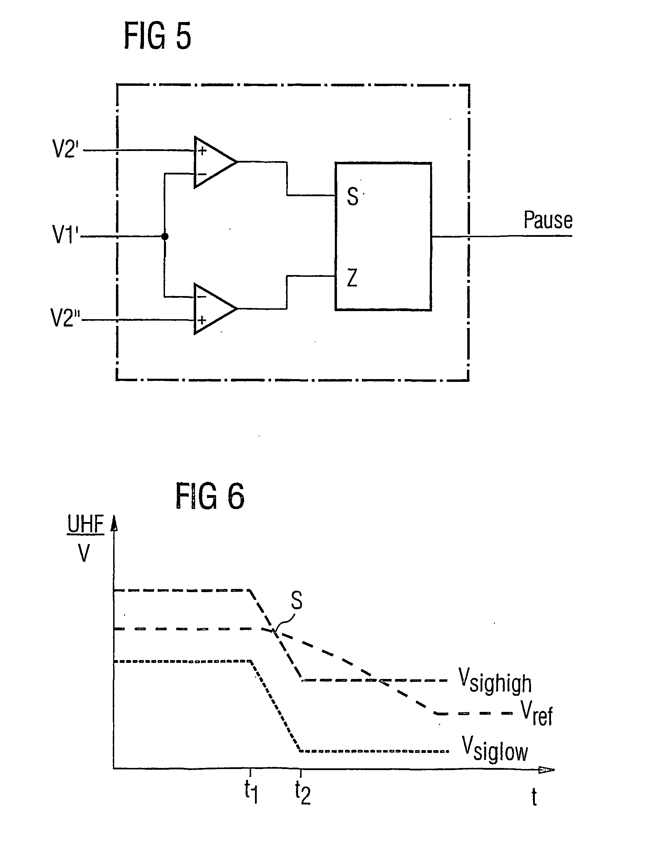

Die Schaltung gemäß Figur 4 funktioniert grundsätzlich genauso wie die gemäß Figur 1 beschriebene Schaltung. Es soll hier die Zeitkonstante der zweiten Ladeschaltung deutlich geringer sein als die der ersten Ladeschaltung, d. h. die Stromquelle i2 entlädt den Kondensator C2 deutlich schneller, als die Stromquelle i1 am Kondensator C1. Dies ist in Figur 6 deutlich zu sehen. Die Signale V sighigh und V silow folgen somit ziemlich genau dem Pegelwechsel der hochfrequenten Eingangsspannung von "high" nach "low". Es kommt, wie auch schon in Figur 3 unter Bezugnahme auf Figur 1 beschrieben, zum Schnittpunkt S zwischen dem Signal V ref und einem Signal, das dem Spannungsigal Vsighigh entspricht.

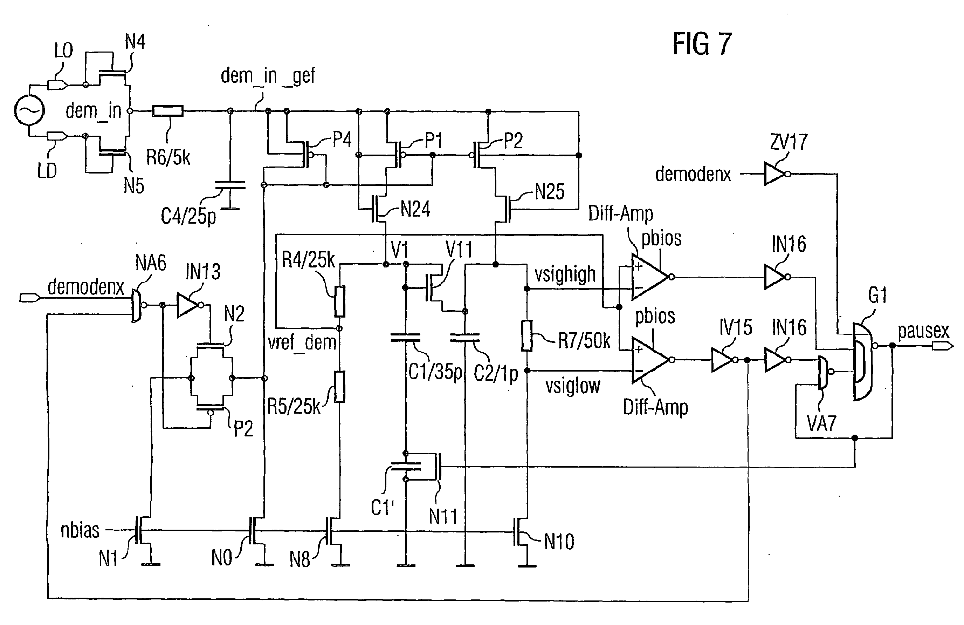

Sobald die Spannung am Spannungsknoten V2 durch das Entladen mittels der Stromquelle i2 soweit abgesunken ist, daß die Spannung unterhalb der hochfrequenten Eingangsspannung UHF liegt, schließt der Schalter S1 wieder. Das bedeutet, daß die Stromquelle i2 nunmehr über den Widerstand R1 zusätzlich den Kondensator C1 entlädt. Dies ist durch den steilerwerdenden Entladeverlauf von V ref in Figur 6 ab dem Zeitpunkt t2 erkennbar. Kommt es nunmehr zu einem Pegelwechsel der hochfrequenten Spannung UHF von "low" nach "high", werden die Kondensatoren C1 und C2 der Ladeschaltungen wieder aufgeladen und es kommt, wie in Figur 7 dargestellt, zu einem Schnittpunkt S' zwischen der Kurve V ref und V siglow.

Die Diode D3 sorgt dafür, daß zwischen V1 und V2 jeweils nur eine Spannungsdifferenz entsprechend dem Spannungsabfall über dieser Diode D3 besteht. Somit wird die Spannung an beiden Knotenpunkten auch bei großen Modulationshüben wie beispielsweise ASK 100, bei der die Amplitude der hochfrequenten Eingangsspannung in die Nähe von 0 Volt beim Pegel "low" gelangt, parallel geführt. Auf diese Weise ist es auch bei diesen hohen Modulationssprüngen sichergestellt, daß stets ein einwandfreier Schnittpunkt zwischen V sighigh und V ref ermittelbar ist.

In Figur 5 ist eine mögliche Auswerteschaltung für die Signale V ref entsprechend V1', V2' entsprechend V sighigh und V2" entsprechend V siglow, dargestellt. Hierbei wird V1' jeweils an den negativen Eingang von zwei Differenzverstärkern gelegt und V sighigh beziehungsweise V siglow jeweils an den positiven Eingang. Die Ausgänge der Differenzverstärker wiederum sind, wie dargestellt, auf ein RS-Flipflop geschaltet. Am Ausgang des RS-Flipflops wird dann ein Signal entsprechend einem "high"-Pegel oder einem "low"-Pegel ausgegeben. Es sind jedoch auch andere Auswerteschaltungen denkbar.

Figur 6 zeigt einen möglichen Signalverlauf, wobei mit den Amplitudenwechsel des eingehenden HF-signals von "high" auf "low" zum Zeitpunkt t₁ die erste und zweite Ladeschaltung entladen werden, und sich damit der gezeigte Spannungsverlauf für V_{sighigh}, V_{sighlow} und V_{ref} ergibt. Durch die längere Entladezeit der ersten Ladeschaltung gegenüber der zweiten Ladeschaltung ergibt sich der Schnittpunkt S. Dieser Schnittpunkt wird beispielhaft durch die in Figur 5 dargestellte Auswerteschaltung erkannt.

Figur 7 zeigt die Schaltungstechnische Realisierung der Erfindung in einer üblichen CMOS-Technologie. Hierbei liegt auch die Eingangswechselspannung an den Eingangsanschlüssen LA und LB an. Die Dioden D1 bis D2 der vorangegangenen Ausführungsbeispiele sind in dieser Technologie entsprechend mit Transistoren N4 und N5 gebildet.

Im Anschluß an die Gleichrichterschaltung ist ein Tiefpaß-Vorfilter zur Unterdrückung der Trägerfrequenz vorgesehen.

Im Gegensatz zu der Ladeschaltung der vorhergehenden Ausführungsbeispiele ist eine schwebende Stromspiegelschaltung aus den p-Kanal Transistoren P1 und P2 vorgesehen. Diese Stomspiegelschaltung lädt die Kondensatoren C1 und C2, an denen die Stromsenken aus den n-Kanal Transitoren N8 und N10 angeschlossen ist. Das Verhältnis des von der Stromspiegelschaltung gelieferten Ladestroms zum Entladestrom bestimmt die jeweilige Ladezeitkonstante der Kondensatoren C1 und C2. Die Wiederstände R4, R5 und R7 realisieren die bereits im Zusammenhang mit den vorhergehenden Ausführungsbeispielen erläuterten Spannungsteiler, die die der Fensterschaltung zugeführten Signale vref_dem, vsighigh und vsiglow liefern.

Die Dioden N24 und N25 entkoppeln die Spannungen V1 und V2, sobald die Eingangsspannung unter den Spannungspegel von V1 bzw. V2 sinkt.

Die Diode V11 hat die gleiche Funktion wie die zuvor erläuterte Diode D3.

Zusätzlich zu den vorhergehenden Ausführungsbeispielen ist vorgesehen, daß bei Erkennung eines hohen Modulationsgrades am Ausgangssignal pausex ein entsprechendes Steuersignal demodenx am Gatter NA6 zugeführt wird. Dieses betreibt die zwei parallelen Stromsenken N1 und N0, die in Reihe mit dem Stromspiegel P4 geschaltet sind. Der Stromspiegel P4 ist wiederum parallel zu den Stromspiegelschaltungen P1 und P2 geschaltet, wodurch der Ladestrom der Kondensatoren um ein vielfaches erhöht wird. Dies gewährleistet eine unverminderte Detektionsbandbreite, da der eingeschwungene Zustand auch bei Aussteuerung mit großem Hub beschleunigt wiederhergestellt wird.

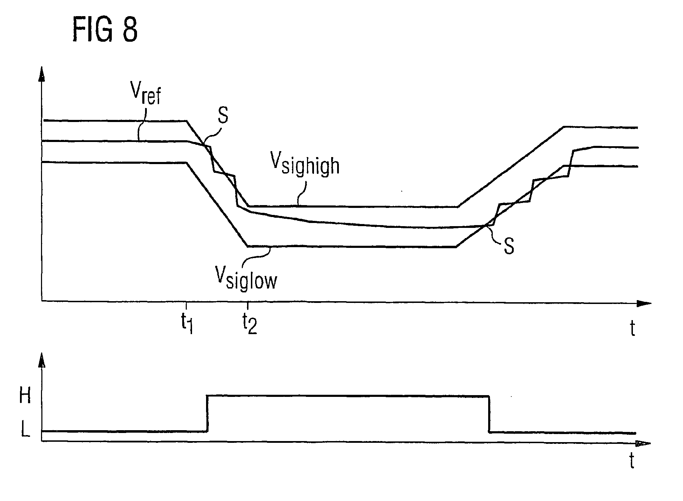

Zur Bearbeitung häufiger Pegelwechsel von zum Beispiel "high" nach "low" oder umgekehrt, ist vorteilhaft die Lade- und Entladezeit der ersten Ladeschaltung zusätzlich veränderbar. Damit wird erreicht, daß der in Figur 8 dargestellte Signalverlauf realisierbar ist und damit auch bei kurzen Folgen von Pegelwechslen die Digitalisierung des analogen Amplitudenmodulierten Signals erfolgt.

Die Veränderbarkeit der Lade- und Entladezeit der ersten Ladeschaltung ist z.B. durch eine zeitweise in Reihe zu dem Kondensator C1 geschaltete Kapazität C1' realisierbar. Damit wird die Gesamtkapazität der ersten Ladeschaltung, und damit ebenso die Lade- und Entladezeit der ersten Ladeschaltung verändert.

Die Lade- und Entladezeit wird dabei nach jedem erkannten Schnittpunkt der Signale Vref mit Vsighigh oder Vsiglow verändert. Dies erfolgt durch einen Transistor N11, der immer bei Verlassen des Signals Vref des durch Vsighigh und Vsiglow aufgespannte Spannungsfensters, die Lade- und Entladezeit verkürzt und bei Wiedereintritt in das Spannungsfenster die Lade- und Entladezeit, bzw. die Kapazität erhöht. Damit folgt der Signalverlauf Vref schneller dem Signalverlauf von Vsighigh und Vsiglow. Als Umschaltpunkt für das Nutzsignal von L nach H oder von H nach L wird jeweils der erste Schnittpunkt S von Vrev mit Vsighigh und Vrev mit Vsiglow verwendet.

Diese Ausführungsform beinhaltet den Vorteil einer höheren Flexibilität der Analog-Digital-Wandlung in Bezug auf die Modulationstiefe und die Nutzsignalfrequenzen. So ist z.B. eine Nutzsignalfrequenz von bis zu 848 kHz mit diesem Ausführungsbeispiel verarbeitbar.

Die Auswertung der Signale Vref, Vsighigh und Vsiglow erfolgt ansonsten analog zu den vorhergehenden Ausführungsbeispielen.

Die Dimensionierungsgrößen der Schaltung sind dem Ausführungsbeispiel direkt entnehmbar.

Die Erfindung ist insgesamt jedoch nicht auf diese Dimensionierung eingeschränkt.

### Bezugszeichenliste

- V1: erster Eingangsknoten
- V2: zweiter Eingangsnoten
- C1: Kondensator
- C2: Kondensator
- I1: Stromquelle
- I2: Stromquelle
- D1: Gleichrichterschaltung
- D2: Gleichrichterschaltung
- Y: Ausgangsknoten
- S1: Entkoppeleinricht (Schalter)

## Patentansprüche

1. Schaltungsanordnung zur Analog-Digital-Wandlung einer durch Wechsel der Amplitude zwischen einem niedrigen und einem hohen Pegel, ASK-modulierten Spannung, mit einer einem Hochfrequenzeingang (LB, LA) nachfolgenden Gleichrichterschaltung (D1, D2; N4, N5), einer ersten Ladeschaltung (C1, i1; C1, P1) und einer zweiten Ladeschaltung (C2, i2; C2, P2), die parallel geschaltet mit einem Ausgang (Y) der Gleichrichterschaltung (D1, D2; N4, N5) verbunden sind und die jeweils eine Ladespannung (V1, V2) erzeugen, einer Entkoppeleinrichtung (S1; N24, N25), die die Ladespannungen (V1, V2) bei einem vorgebenen Verhältnis zwischen der jeweiligen Ladespannung (V1, V2) einer Eingangsspannung (UHF) der Gleichrichtschaltung (D1, D2; N4, N5) entkoppelt und einer Auswerteschaltung, die aus dem Verhältnis der Ladespannungen (V1, V2) einen Pegelwechsel ermittelt, wobei die Entlade- und/oder Ladezeit zumindest der ersten Ladeschaltung veränderbar ist.

## Claims

1. Circuit arrangement for analog/digital conversion of a voltage which is ASK modulated by alternating the amplitude between a low and a high level, having a rectifier circuit (D1, D2; N4, N5) downstream of a radio-frequency input (LB, LA), a first charging circuit (C1, i1; C1, P1) and a second charging circuit (C2, i2; C2, P2) which are connected in parallel to an output (Y) of the rectifier circuit (D1, D2; N4, N5) and each produce a charging voltage (V1, V2), a decoupling device (S1; N24, N25) which decouples the charging voltages (V1, V2) at a prescribed ratio between the respective charging voltage (V1, V2) and an input voltage (UHF) for the rectifier circuit (D1, D2; N4, N5), and an evaluation circuit which ascertains a level change from the ratio between the charging voltages (V1, V2), where the discharge and/or charging time of at least the first charging circuit can be altered.

## Revendications

1. Montage de conversion analogique-numérique d'une tension à modulation ASK par alternance de l'amplitude entre un niveau haut et un niveau bas, comprenant un circuit (D1, D2 ; N4, N5) redresseur en aval d'une entrée (LB, LA) de haute fréquence, un premier circuit (C1, i1 ; C1, P1) de charge et un deuxième circuit (C2, i2 ; C2, P2) de charge, qui sont reliés en étant montés en parallèle à une sortie (Y) du circuit (D1, D2 ; N4, N5) redresseur et qui produisent respectivement une tension (V1, V2) de charge, un dispositif (S1; N24, N25) de découplage, qui découple les tensions (V1, V2) de charge pour un rapport prescrit entre la tension (V1, V2) de charge respective, d'une tension (UHF) d'entrée du circuit (D1, D2 ; N4, N5) redresseur et un circuit d'exploitation, qui détermine un changement de niveau à partir du rapport des tensions (V1, V2) de charge, la durée de décharge et/ou de charge d'au moins le premier circuit de charge pouvant être modifiée.
